# EUROPEAN PATENT SPECIFICATION

(11) **EP 1 116 696 B1**
(45) Date of publication and mention of the grant of the patent: **30.06.2004**
(21) Application number: 01300112.8
(22) Date of filing: 08.01.2001
(51) Int. Cl.: C03B 37/014, C01B 23/00, B01D 53/047, B01D 53/22

(54) **Helium recovery method**
Verfahren zur Gewinnung von Helium
Procédé pour la récupération de l'hélium

(30) Priority: 14.01.2000 US 483314
(43) Date of publication of application: 18.07.2001
(73) Proprietor: THE BOC GROUP, INC., Murray Hill, New Providence, New Jersey 07974-2082 (US)
(72) Inventor: Wenchang, Ji, Doylestown, Pennsylvania 18901 (US); Shirley, Arthur Irving, Piscataway, New Jersey 08854 (US)
(74) Representative: Wickham, Michael

(56) References cited:
- EP-A- 0 820 963
- US-A- 5 344 480
- US-A- 5 632 803
- US-A- 5 890 376
- DATABASE WPI Section Ch, Week 199907 Derwent Publications Ltd., London, GB; Class E36, AN 1999-076317 XP002163524 & JP 10 316443 A (FURUKAWA ELECTRIC CO LTD), 2 December 1998 (1998-12-02)
- DATABASE WPI Section Ch, Week 198701 Derwent Publications Ltd., London, GB; Class L01, AN 1987-002515 XP002163525 & JP 61 261223 A (FURUKAWA ELECTRIC CO LTD), 19 November 1986 (1986-11-19)

## Description

The present invention relates to a method of recovering helium from a consolidation furnace in the production of optical fibers.

Optical fiber manufacturing is basically a two-phase process that involves fabrication of a specially constructed glass rod called a preform and then melting the preform and drawing it into a thin fiber. Preform fabrication normally involves two steps, deposition and consolidation, that may be combined as one continuous operation or split into two separate ones.

Helium gas has three primary uses in optical fiber manufacture, a carrier gas in preform deposition, a sweep gas in preform consolidation and a heat transfer medium for fiber drawing. Each of these three process steps introduces different impurities, contaminant levels and/or heat levels into the helium gas. The traditional once-through helium flows (i.e. entering the general gas waste stream) used in optical fiber manufacturing processes are wasteful and result in excessive consumption and unnecessarily high cost.

Other consolidation processes, such as disclosed in U.S.A 5,055,121, for producing glass preform, include the selective fluorination of the cladding of the preform. This can lower the refractive index of the quartz glass without affecting transmission characteristics of the optical fiber. The glass preform is produced by the steps of deposition of soot of quartz glass in particulate form (referred to as a "soot" in US-A-5 055 121) on a pipe; dehydration; and vitrification and addition of fluorine.

Dehydration gases include chlorine and chlorine-containing compounds such as SOCl₂ and CCl₄. In the vitrification and fluorine addition step, fluorine-containing gases such as SF₆, CCl₂F₂, CF₄, C₂F₆ and SiF₄ are employed. To obtain the transparent glass preform containing no residual bubbles, helium is the preferred carrier gas for both dehydration and fluorine-addition steps as it is easily dissolved in the glass. Table I summarizes the gas flow rates and concentrations used in the production of glass preform as per the example of the '121 patent.

**Table I**

| Dehydration | | Fluorine Addition | |
|---|---|---|---|
| Cl₂ | 0.6 l/min (6%) | SiF₄ | 0.3 l/min (3%) |
| He | 10 l/min (94%) | He | 10 l/min (97%) |

A considerable portion of the chlorine and fluorine-containing gases may leave this process untreated and are currently abated by scrubbing with an alkaline solution. The helium exiting the process is released into the atmosphere. Helium is a non-renewable gas and is expensive. As such, it is highly desirable to recover and recycle the helium to reduce the cost of optical glass fiber production.

Accordingly to the present invention there is provided a process as claimed in any one of the preceding claims.

The present invention provides for a method for recovering helium from a multiple-stage consolidation furnace. The stages in an optical fiber consolidation process may include purge with nitrogen, dehydration with chlorine/helium gas; vitrification with a nitrogen/helium gas mixture; and addition of fluorine with helium/fluorine containing gas mixture.

In a typical process for the recovery of helium from preform drying and consolidation, the exhaust gas mixture exiting the consolidation furnace comprises He, Cl₂ HCl, N₂, O₂, H₂O, and fluorine-containing gas.

Typically, the preform will complete the above steps in the furnace. The top of the furnace is partially open and the process gases as noted enter the furnace at the bottom and exit near the top. Large amounts of air are sucked into the exhaust stream which is carried to the blower or the vacuum pump.

In one embodiment of the present invention, helium is recovered from a multiple-stage consolidation furnace comprising the steps of feeding the exhaust gas to a multi-valve; actuating the valve such that the exhaust gas from one stage of the consolidation process comprising He, Cl₂, HCl, O₂, N₂, and H₂O is directed to an abatement facility selected from an aqueous scrubber or gas reactor column; and recovering the helium gas by pressure swing adsorption (PSA) or membrane process. The multi-valve assembly is actuated such that the exhaust gas stream containing nitrogen is vented.

In another embodiment of the present invention, the exhaust gas is fed to a multi-valve assembly where the valve is actuated such that the nitrogen exhaust stream is vented from the valve. The exhaust gas from the stages of the consolidation which comprise He, Cl₂, HCl, O₂, N₂, H₂O and fluorine-containing gases is fed to a membrane module which removes helium gas and moisture and the remaining exhaust is then fed to an abatement facility which comprises either an aqueous scrubber or a gas recovery column which can remove the Cl₂ and HCl and vent N₂ O₂, and fluorine containing gases. The recovered helium is further treated by a dryer for recycle.

In another embodiment of the present invention, helium is recovered from a multiple consolidation furnace by the steps of feeding the exhaust gas from the furnace to a multi-valve assembly. The exhaust gas from this stage of the consolidation process comprising He, Cl₂, HCl, O₂, N₂ and H₂O is directed to a first membrane module where helium is separated and recovered. The multi-valve is actuated so that it can receive a nitrogen exhaust gas which it vents as well as the exhaust gas from the vitrification and fluorination stage of the consolidation process comprising He, N₂, O₂ and fluorine-containing gas which is stepwise directed to a second membrane module such that helium is separated and recovered. The exhaust gas from the second membrane module is further treated by the third membrane module so that fluorine-containing gas is separated from the gas mixture and is recovered for recycle.

In a further embodiment of the present invention, helium is recovered from a multiple consolidation furnace from the steps of directing the exhaust gas from the stage of the consolidation furnace comprising He, Cl₂, HCl, O₂, N₂ and H₂O through a multi-valve to an abatement facility selected from the group consisting of a scrubber or GRC, and further to a dryer if an aqueous scrubber is employed. Meanwhile, the stage exhaust comprising He, N₂ ,O₂ and fluorine-containing gases is directed through the multi-valve to a line leading from the abatement facility where it joins the gases from the dryer. This combined gas is directed to a PSA or membrane separation unit or combination thereof where helium is separated and recovered.

The phrase "multi-valve" for purposes of the present invention is meant to include both multiple way valves and multi-valves. Thus, during the consolidation method, a single, say, four port or way valve, or a plurality of valves, may be operated to select a chosen treatment line from a plurality thereof.

The methods according to the invention will now be described by way of example with reference to the drawings, in which:

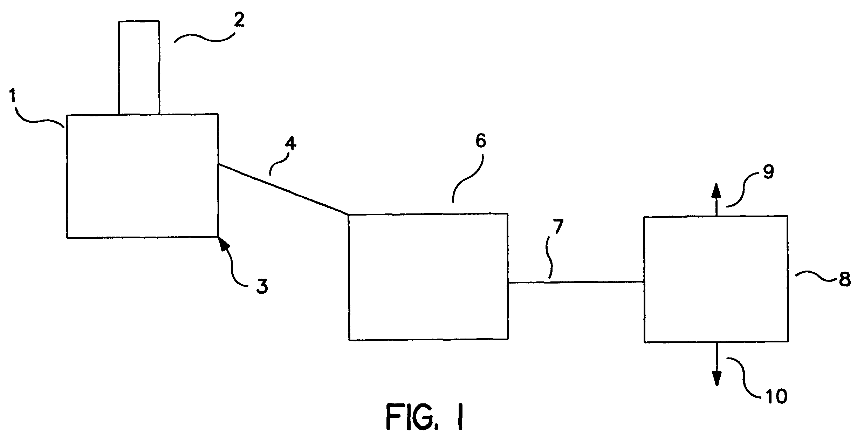

Figure 1 is a schematic representation of a multiple - stage consolidation furnace employed in producing optical fibres;
Figures, 2 to 4 are schematic representations of exhaust gas treatment systems in which the present invention may be practiced.

With reference to Figure 1, the furnace 1 is used to perform drying a consolidation process for preform fabrication. Furnace 1 contains the preform 2 which is traveling from top to bottom of the furnace. Line 3 enters the bottom of the furnace and carries the varieties of gases and gas mixture employed in the furnace.

Line 4 is the exhaust gas line which relieves the furnace of gases such as He, Cl₂, HCl, O₂, and N₂ and directs them to a vacuum pump or blower 6 which further leads the gases through line 7 to an abatement facility 8. Typically, the abatement facility is a scrubber where the contaminated water, after contact with the gas stream, exits through line 9 and the purified gases exit through line 10.

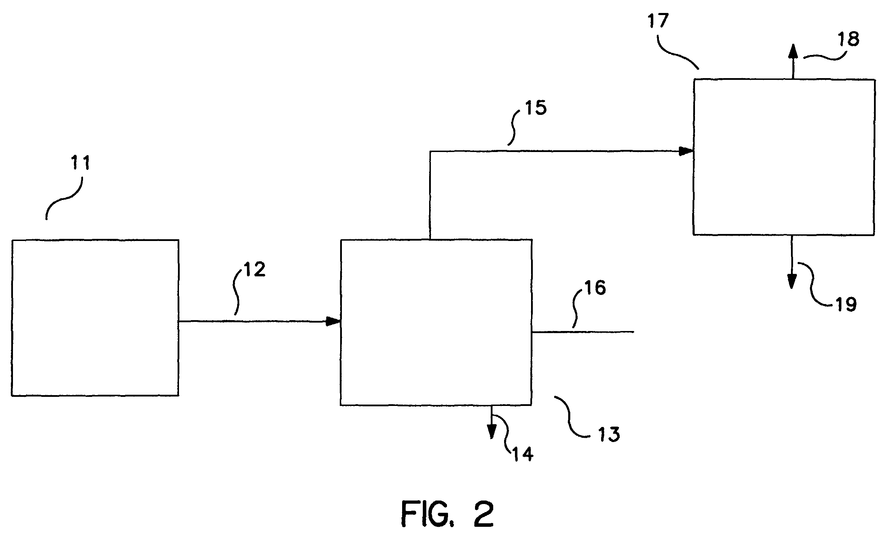

Fig. 2 is a schematic representation of a first aspect of the present invention and illustrates a gas treatment apparatus which can be associated with a consolidation furnace (not shown). All exhaust gases from the furnace are extracted by operation of a vacuum pump 11. Line 12 carries waste gases from the vacuum pump 11 to a four-way valve 13. The four-way valve 13 is operable to select which one of the three treatment lines 14, 15 and 16 communicates at any one time with the line 12. A first treatment line 14 is used during purging of the furnace (typically with nitrogen); a second treatment line 15 is used during the dehydration step, and a third treatment line 16 is used during the vitrification and fluorination step. Thus the purge gas, (N₂) exits through line 14; the gas resulting from the dehydration stage(He, Cl₂, HCl, O₂, and N₂) exits through line 15; and the gas mixture resulting from the vitrification/fluorination stage (He, O₂, N₂ or SiF₄) exits through line 16. Line 15 includes units which include either a scrubber or a gas reactor column (GRC) according to WO-A-89/11905 in an upstream position, and a PSA unit in a downstream position. He is separated from N₂, O₂ and H₂O by the PSA unit after passing through the scrubber or GRC. Line 16 may include apparatus for scrubbing the gas with an alkaline solution.

Helium product gas is collected from units 17 in outlet 18 and may be recycled to the furnace. Waste gas from the PSA unit is vented through outlet 19.

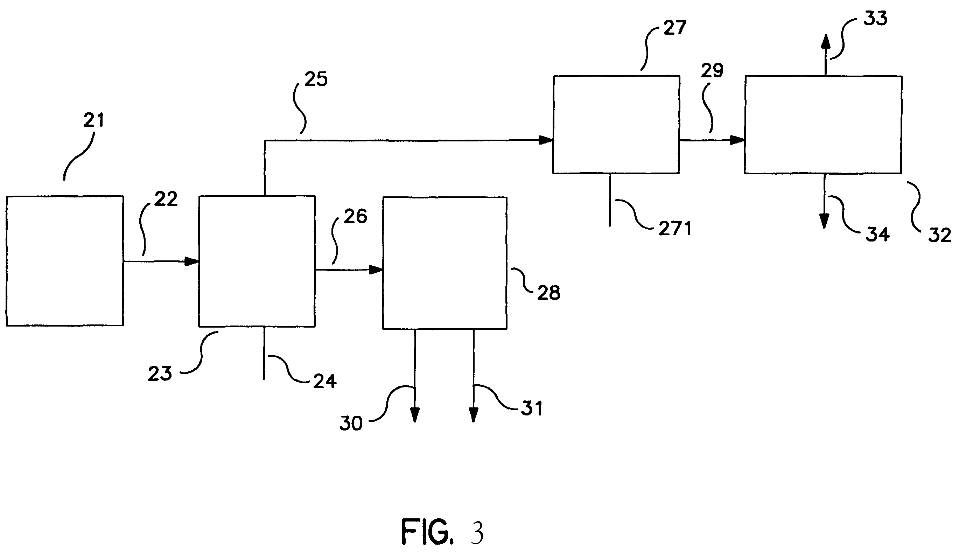

Fig. 3 is a schematic representation of another aspect of the present invention.

Fig. 3 is a schematic representation of another aspect of the present invention. Waste gases from the consolidation furnace travel from a vacuum pump 21 through line 22 to four-way valve 23. Line 24 vents N₂ purge gas to the atmosphere and line 25 delivers He, Cl₂, HCl, O₂, N₂, and H₂O (exhaust from the dehydration stage) to a first membrane module 27 where He is removed through line 271. The recovered helium is further treated by a dryer for recycle. Cl₂, HCl, O₂, and N₂ are delivered through line 29 to a scrubber or GRC 32. Line 26 directs He, O₂, N₂ or fluorine-containing gases (from the vitrification and fluorination stage) from the four-way valve and to a second membrane module 28 where helium is removed through line 30 and O₂, N₂ or fluorine-containing gases are vented through line 31. Fluorine-containing gases can be separated from the gas mixture by the third membrane module for recycle.

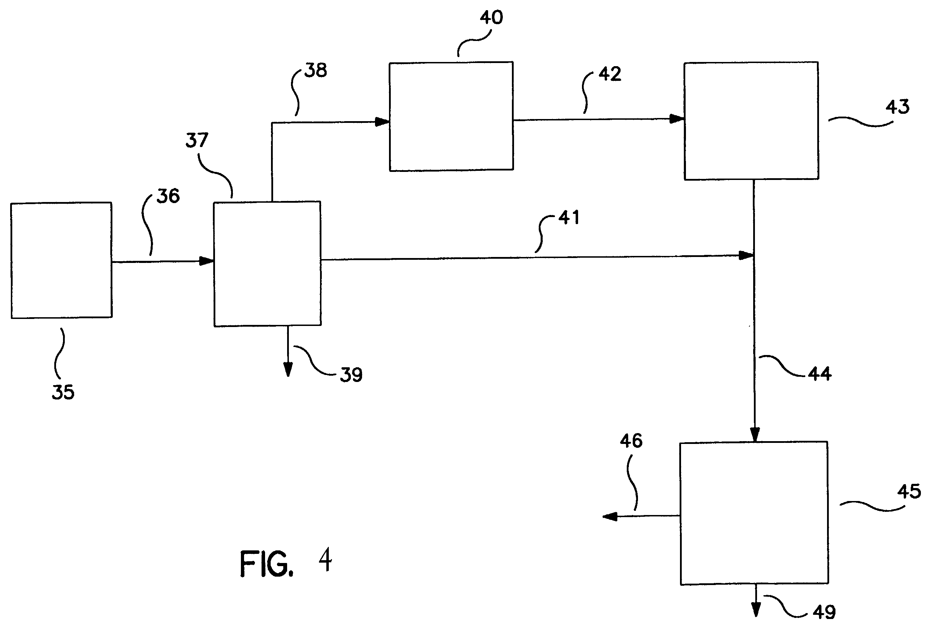

Fig. 4 is a schematic representation of another aspect of the present invention. Vacuum pump 35 delivers the waste gases from the consolidation furnace through line 36 to a four-way valve 37 where N₂ (purge gas) is vented through line 39 and He, Cl₂, HCl, O₂, and N₂ (exhaust from the dehydration stage) are vented through line 38 to an abatement facility 40, either a scrubber or a GRC. A dryer 43 is connected to the scrubber through line 42 where He, H₂O, N₂ and O₂ exit the scrubber and He, N₂ and O₂ exit through line 44.

Line 41 is connected to the four-way valve and carries He, N₂ and O₂ as exhaust gas from a nitrification stage. This line connects with line 44 which in turn connects to a helium-separation unit such as a PSA or membrane unit 45 where O₂ and N₂ exit through line 46 and recovered He exits through line 47.

One measure employed in the methods of the present invention involves sealing the opening where the preform enters the furnace and/or the opening where it leaves the furnace. This not only improves efficiency of the consolidation furnace but also beneficially affects the downstream treatment steps as fewer impurities from air enter the system and are directed via exhaust to the treatment facilities.

Membrane modules may be employed in the methods according to the invention to separate helium from Cl₂, HCl, N₂, and O₂. Other membrane units may be employed in the methods of the present invention to separate fluorine containing gases such as SiF₄, SF₆, CCl₂F₂, CF₄, and C₂F₆ when they are present in the exhaust with helium. In the methods of the present invention, for example, a first membrane may be employed to separate helium from Cl₂, HCl, N₂, and O₂. A second membrane may be employed to separate helium from O₂, N₂, and fluorine-containing gases. A subsequent third membrane may be employed to separate fluorine-containing gases from N₂ and O₂.

Conventional aqueous scrubbers may be employed as the abatement facility in the methods of the present invention. The abatement facility may also or alternatively employ gas reactor column (GRC) technology. This technology is employed for exhaust stream containing both HCl and Cl₂ and may offer advantages over traditional scrubbers in treating these gas streams. The hot, dry GRC system converts the hazardous organic and reactive halides to non-hazardous solids. A two cartridge heater unit in tandem will provide 100% up time on exhaust treatment and will destroy hazardous gases to below threshold limit values (TLV - 0.5 ppm for CL₂ and 0.5 ppm for HCI). The GRC treated gases can be fed to a gas separation unit such as a PSA or membrane directly and without further treatment.

In, for example the removal by PSA of N₂, O₂ and moisture from helium. The PSA helium recovery process separates air from helium by preferential adsorption/desorption of nitrogen and oxygen. Zeolite molecular sieves are employed as adsorbents and include, for example, 13X, CaX, 4A, 5A, etc.

## Claims

1. A method for treating gas exhausted from a multiple-stage consolidation furnace in which is formed a glass preform from which optical fibre is able to be made, the method comprising selecting by operation of valve means each one of a plurality of lines for treatment of the exhaust gas, wherein at least one of the treatment lines includes a gas separation unit which is operated to separate helium from the exhaust gas, **characterised in that** there is a first line for treating purge gas exhausted from the furnace, a second line for treating gas exhausted from the furnace during a dehydration stage, and a third line for treating gas exhausted from the furnace during a vitrification and/or fluorination stage.

2. A method as claimed in claim 1, wherein said multiple-stage consolidation furnace comprises sealing means at the exhaust gas outlet of said furnace to limit air infiltration into the exhaust gas.

3. A method as claimed in claim 1 or claim 2, wherein the gas separation unit comprises a membrane unit and/or a pressure swing adsorption unit.

4. A method as claimed in claim 3, wherein the membrane unit is operated to separate a mixture of helium and water vapour from the exhaust gas and the helium is dried downstream thereof.

5. A method as claimed in claim 4, wherein there is a unit for removing chlorine and compounds of chlorine from the exhaust gas upstream of the gas separation unit.

6. A method as claimed in claim 5, wherein there is an additional unit for removing chlorine and compounds of chlorine from exhaust gas from which helium has been separated, the additional unit being located downstream of the helium separation unit.

7. A method as claimed in any one of the preceding claims, wherein the second line includes said gas separation unit for separating helium from the exhaust gas, the gas separation unit being a membrane unit.

8. A method as claimed in claim 7, wherein the third line includes another said gas separation unit, said another gas separation unit being a membrane unit.

## Patentansprüche

1. Verfahren zur Behandlung von Gas, das aus einem mehrstufigen Brstarrungsofen abgeführt wird, in welchem eine Glasvorform gebildet wird, aus welcher optische Fasern hergestellt werden können, wobei das Verfahren das Wählen jeder aus einer Mehrzahl von Leitungen zur Behandlung des Abgases durch Betätigung von Ventilmitteln umfasst und wobei mindestens eine der Behandlungsleitungen eine Gastrenneinheit enthält, die zum Abtrennen von Helium aus dem Abgas betrieben wird, **dadurch gekennzeichnet, dass** eine erste Leitung zur Behandlung von aus dem Ofen abgezogenem Spülgas, eine zweite Leitung zur Behandlung von aus dem Ofen während einer Dehydrierungsstufe abgezogenem Gas, und eine dritte Leitung zur Behandlung von aus dem Ofen während einer Glasumwandlungs- und/oder Fluorisierungsstufe abgezogenem Gas vorhanden ist.

2. Verfahren nach Anspruch 1, wobei der mehrstufige Erstarrungsofen Verschlussmittel am Abgasauslaß des Ofens zum Begrenzen des Eindringens von Luft in das Abgas aufweist.

3. Verfahren nach Anspruch 1 oder 2, wobei die Gastrenneinheit eine Membraneinheit und/oder eine Druckwechsel-Adsorptionseinheit umfasst.

4. Verfahren nach Anspruch 3, wobei die Memb-raneinheit zum Trennen eines Gemischs aus Helium und Wasserdampf aus dem Abgas betrieben wird und das Helium stromab davon getrocknet wird.

5. Verfahren nach Anspruch 4, wobei eine Einheit zum Abscheiden von Chlor und Chlorverbindungen aus dem Abgas stromauf der Gastrenneinheit vorhanden ist.

6. Verfahren nach Anspruch 5, wobei eine zusätzliche Einheit zum Abscheiden von Chlor und Chlorverbindungen aus Abgas vorgesehen ist, aus dem Helium abgetrennt worden ist, wobei die zusätzliche Einheit stromab der Heliumtrenneinheit angeordnet ist.

7. Verfahren nach einem der vorhergehenden Ansprüche, wobei die zweite Leitung die genannte Gastrenneinheit zum Abtrennen von Helium aus dem Abgas enthält und die Gastrenneinheit eine Membrantrenneinheit ist.

8. Verfahren nach Anspruch 7, wobei die dritte Leitung die genannte weitere Gastrenneinheit enthält und die genannte weitere Gastrenneinheit eine Membraneinheit ist.

## Revendications

1. Procédé de traitement d'un gaz évacué d'un four de consolidation à étages multiples dans lequel est formée une préforme de verre à partir de laquelle on peut fabriquer une fibre optique, le procédé comprenant la sélection, par l'actionnement de moyens de vannes, de chacune d'une pluralité de canalisations pour le traitement du gaz d'échappement, dans lequel au moins une des canalisations de traitement comprend une unité de séparation du gaz qui est utilisée pour séparer l'hélium du gaz d'échappement, ***caractérisé en ce que*** l'on a une première canalisation pour traiter le gaz de purge évacué du four, une deuxième canalisation pour traiter le gaz évacué du four pendant une étape de déshydratation, et une troisième canalisation pour traiter le gaz évacué du four pendant une étape de vitrification et/ou de fluorination.

2. Procédé selon la revendication 1, dans lequel ledit four de consolidation à étages multiples comprend des moyens d'obturation au niveau de l'orifice de sortie du gaz d'échappement dudit four, destinés à limiter l'infiltration d'air dans le gaz d'échappement.

3. Procédé selon la revendication 1 ou la revendication 2, dans lequel l'unité de séparation du gaz comprend une unité à membrane et/ou une unité d'adsorption modulée en pression.

4. Procédé selon la revendication 3, dans lequel l'unité à membrane est utilisée pour séparer un mélange d'hélium et de vapeur d'eau à partir du gaz d'échappement et l'hélium est déshydraté en aval de cetle-ci.

5. Procédé selon la revendication 4, dans lequel on a une unité pour extraire le chlore et les composés du chlore du gaz d'échappement, en amont de l'unité de séparation du gaz.

6. Procédé selon la revendication 5, dans lequel on a une unité supplémentaire pour extraire le chlore et les composés du chlore du gaz d'échappement d'où l'hélium a été séparé, l'unité supplémentaire étant située en aval de l'unité de séparation de l'hélium.

7. Procédé selon l'une quelconque des revendications précédentes, dans lequel la seconde canalisation comprend ladite unité de séparation du gaz pour séparer l'hélium du gaz d'échappement, l'unité de séparation du gaz étant une unité à membrane.

8. Procédé selon la revendication 7, dans lequel la troisième canalisation comprend une autre dite unité de séparation. du gaz, ladite autre unité de séparation du gaz étant une unité à membrane.
